# EUROPEAN PATENT APPLICATION

(11) **EP 4 550 282 A1**
(43) Date of publication of application: **07.05.2025**
(21) Application number: 23830519.7
(22) Date of filing: 30.06.2023
(51) Int. Cl.: G07C 9/00

(54) **GATE**

(30) Priority: 30.06.2022 CN 202210760472; 28.07.2022 CN 202210900602
(71) Applicant: Hangzhou Hikvision Digital Technology Co., Ltd., Hangzhou, Zhejiang 310051 (CN)
(72) Inventor: SONG, Xin, Hangzhou, Zhejiang 310051 (CN); GAO, Yingtong, Hangzhou, Zhejiang 310051 (CN); FENG, Wei, Hangzhou, Zhejiang 310051 (CN); RAO, Dongwei, Hangzhou, Zhejiang 310051 (CN); LIU, Huafeng, Hangzhou, Zhejiang 310051 (CN); WENG, Kejie, Hangzhou, Zhejiang 310051 (CN); YE, Jun, Hangzhou, Zhejiang 310051 (CN); DING, Shaojie, Hangzhou, Zhejiang 310051 (CN); MI, Shihao, Hangzhou, Zhejiang 310051 (CN)
(74) Representative: Epping - Hermann - Fischer
(86) International application number: PCT/CN2023/104966
(87) International publication number: WO 2024/002356

(57) **Abstract**

A gate device comprises: a box body, wherein one side of a plane where the box body is located is a passage space used for passage of a passing object, and the box body comprises a box body shell used for accommodating a core assembly; a top cover covering an upper end of the box body; a door panel which is movable under a drive of a control assembly to control passage of a target, wherein the core assembly comprises a control assembly; wherein the core assembly further comprises an imaging assembly which comprises a camera, wherein the camera is arranged towards a direction of an entrance of the passage space and arranged at a position lower than the plane where the top cover is located for acquiring an image of the passing object; the core assembly further comprises a light supplementing lamp which emits supplementing light towards the direction of the entrance of the passage space and is arranged at a position lower than the plane where the top cover is located; a field of view of the camera and the light supplementing range of the light supplementing lamp overlap at least at the entrance of the passage space.

## Description

### Technical Field

The present application relates to the technical field of gate device manufacturing, in particular to a gate device.

### Background

A gate device is a passage blocking apparatus (passage management device). The gate device is widely used in public places such as subway stations, bus stops and residential areas. A gate of the gate device will automatically open when a magnetic card or fingerprint swiped by a person on a sensing system of the gate device and the card or fingerprint is valid. After the person has passed through, the gate will automatically close. The conveniently and quickly management of the passages in public places is therefore realized.

A face recognition gate device is a type of gate device, which can be open or closed by means of face recognition technology. At present, in a commonly used face recognition gate device, an imaging apparatus is generally arranged on the top of the gate device to collect a face image of a passing person.

### Summary

The present application provides a gate device, including: a box body, wherein a passage space for passage of a passing object is formed at one side of a plane where the box body is located, and the box body includes a box body shell used for accommodating a core assembly; a top cover covering an upper end of the box body; a door panel which is movable under a drive of a control assembly to control passage of a target, wherein the core assembly includes the control assembly; wherein the core assembly further includes an imaging assembly which includes a camera, wherein the camera is arranged towards a direction of an entrance of the passage space and arranged at a position lower than the plane where the top cover is located for acquiring an image of the passing object; the core assembly further includes a light supplementing lamp which emits supplementing light towards the direction of the entrance of the passage space and is arranged at a position lower than the plane where the top cover is located; a field of view of the camera and a light supplementing range of the light supplementing lamp overlap at least at the entrance of the passage space.

Beneficial effects brought by the gate device of the present application:
In the gate device provided by the present application, the camera is arranged towards the direction of the entrance of the passage space, and arranged at the position lower than the plane where the top cover is located; the structure of top surface of the gate device is simplified and the overall shape design is more concise compared to the lens assembly arranged on the top surface of the gate device; moreover, the camera is arranged towards the direction of the entrance of the passage space, so that the image of the passing area inside the gate device passage can also be obtained, increasing the field of view angle of the obtained image, and thereby increasing the effective recognition and detection area of the gate device.

### Brief Description of the Drawings

Fig. 1A is a schematic diagram of a structure of a gate device provided by an embodiment of the present application;
Fig. 1B is a schematic diagram of a structure of another gate device provided by an embodiment of the present application;
Fig. 2 is a schematic diagram of a structure of yet another gate device provided by an embodiment of the present application;
Fig. 3 is an enlarged view at A in Fig. 2;
Figs. 4A and 4B are schematic diagrams of the light supplementing range of the light supplementing lamp of the gate device according to an embodiment of the present application;
Figs. 5A and 5B are schematic diagrams of the field of view range of the imaging assembly of the gate device according to an embodiment of the present application;
Fig. 6 is a partial diagram of a structure of another gate device provided by an embodiment of the present application;
Fig. 7 is a schematic diagram of a structure of another gate device provided by an embodiment of the present application;
Fig. 8 is a partial diagram of a structure of another gate device provided by an embodiment of the present application;
Fig. 9 is a schematic diagram of a structure of another gate device disclosed in an embodiment of the present application;
Fig. 10 is a schematic partial diagram of a structure of another gate device disclosed in an embodiment of the present application;
Fig. 11 is a schematic diagram of another gate device disclosed in an embodiment of the present application, in which a part of the gate device is in a separated state;
Fig. 12 is a schematic diagram of a structure of an infrared detection component disclosed in an embodiment of the present application;
Fig. 13 is a schematic diagram of a structure of another gate device provided by the embodiment of the present application.

### Detailed Description

The technical solutions in the embodiments of the present application will be clearly and completely described below with reference to the accompanying drawings in the embodiments. Obviously, the embodiments described are only some of, but not all of, the embodiments of the present application. All other embodiments obtained by those skilled in the art without creative work based on the embodiments of the present application fall within the scope of the present application.

In the description of the present application, it should be understood that the terms "upper", "lower", "left" and "right", "top", "bottom", "inner" and "outer" etc., indicate that the orientation or positional relationship is based on the orientation or positional relationship shown in the drawings (which is only for the convenience of describing the present application and simplifying the description), but not indicate or imply that the device or element referred to must have a specific orientation and a specific orientation structure and operation, so it cannot be understood as a limitation of the present application.

The term "and/or" herein is merely a kind of relationship that describes the related objects, indicating that there may be three kinds of relationships. For example, A and/or B may represent three cases as follows: there is A separately, there are A and B simultaneously, and there is B separately.

The terms "first" and "second" in the description and drawings of the present application are used to distinguish different objects, or to distinguish different treatments of the same object, rather than to describe a specific order of objects.

**In** addition, the terms "including" and "having" and any variations thereof mentioned in the description of the present application are intended to encompass a non-exclusive inclusion. For example, a process, method, system, product or device that includes a series of steps or units is not limited to the listed steps or units, but optionally includes other steps or units not listed or other steps or units inherent to such processes, methods, products or device.

It should be noted that words such as "exemplarily" or "for example" in the embodiment of the present application are used to indicate an example, illustration or explanation. Any embodiment or design solution described as "exemplary" or "for example" in the present application should not be interpreted as being preferred or advantageous over other embodiments or design solutions. Specifically, the use of words such as "exemplary" or "for example" aims to present a related concept in a specific way.

In the description of the present application, unless otherwise specified, "multiple" means two or more.

A gate device is provided in some embodiments of the present application, including:
a box body, wherein a passage space for passage of a passing object is formed at one side of a plane where the box body is located, and the box body includes a box body shell used for accommodating a core assembly;
a top cover covering an upper end of the box body;
a door panel which is movable under the drive of a control assembly to control passage of a target, wherein the core assembly includes the control assembly;
wherein the core assembly includes an imaging assembly which includes a camera, wherein the camera is arranged towards a direction of an entrance of the passage space and arranged at a position lower than the plane where the top cover is located for acquiring an image of the passing object;
the core assembly further includes a light supplementing lamp which emits supplementing light towards a direction of the entrance of the passage space and is arranged at a position lower than the plane where the top cover is located;
a field of view of the camera and a light supplementing range of the light supplementing lamp overlap at least at the entrance of the passage space.

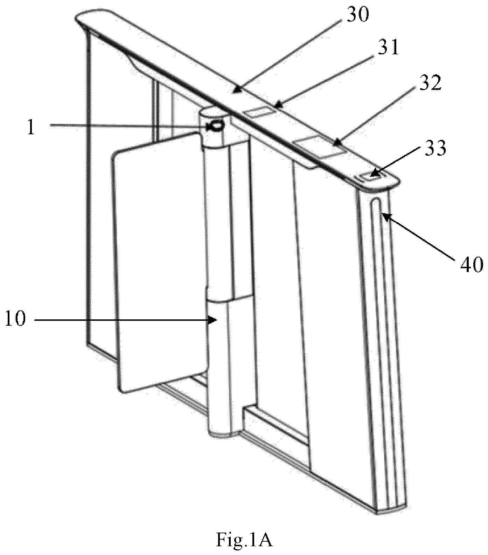

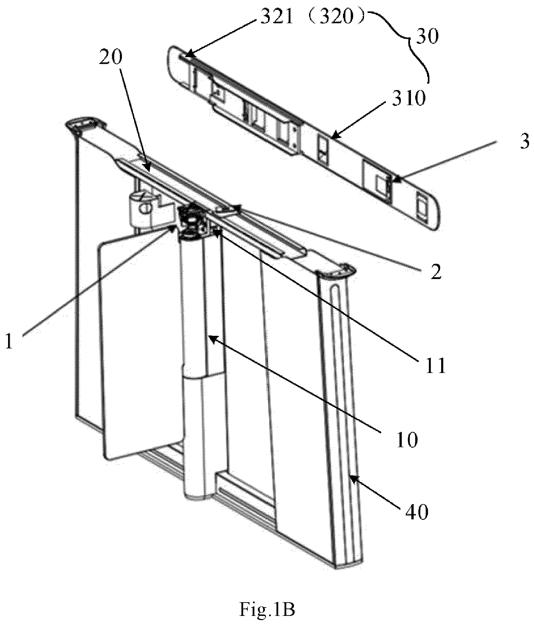

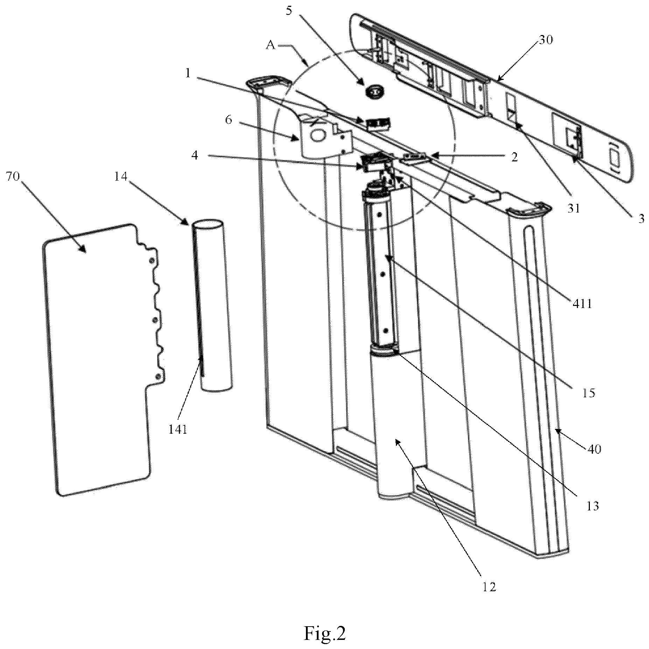

As shown in Figs. 1A and 1B, a gate device 100 is provided in some embodiments of the present application. The gate device 100 can be used in places such as residential areas, parking lots, hospitals, subway stations, and bus stops to realize the functions such as intercepting and diverting vehicles or passing persons. Exemplarily, Figs. 1A and 1B schematically show a part of a gate device. Only one box body is shown in Figs. 1A, 1B and 2. In an embodiment, the structure of one or more further box bodies of the gate device is substantially the same as that shown in Figs. 1A, 1B and 2, and multiple box bodies are arranged side by side to jointly form the gate device. In a further embodiment, the structure of a further box body of the gate device is substantially in a mirror image relationship with that shown in Figs. 1A, 1B and 2, to jointly form the gate device. In a further embodiment, the structure of one or more further box bodies of the gate device are substantially the same as that shown in Figs. 1A, 1B and 2, but not comprising a door panel. In a further embodiment, the gate device may include multiple box bodies arranged in parallel, and a door panel is arranged between two adjacent box bodies when the gate device does not allow being passed. A passage space A is formed between two adjacent box bodies. In a further embodiment, a wall body or a column body or a baffle together with the gate device part shown in Figs. 1A and 1B form a gate device, and the gate device passage space A is between them.

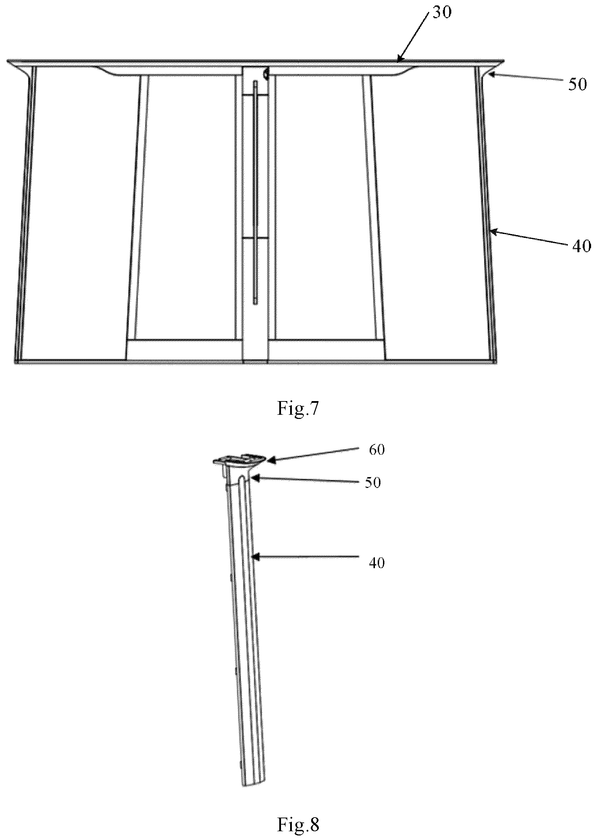

Fig. 7 schematically shows a gate device, which exemplarily includes two box bodies. The two box bodies are physically separated to form a passage space A for a passing person or a vehicle to pass through.

In some examples, the gate device has a face recognition function.

It should be noted that face recognition is a technology for performing recognition based on human facial feature information. A series of technologies for collecting an image or a video stream containing human face with a camera, automatically detecting the human face, and then performing face recognition on the detected human face are generally also called as portrait recognition and facial recognition.

In some examples, as shown in Figs. 1A and 1B, the gate device includes an imaging assembly 1.

Exemplarily, the imaging assembly 1 may be a camera, and the camera is arranged towards the entrance of the passage space. In some embodiments, the camera includes a color camera and an infrared camera.

For example, when the passing object is going to pass through the gate device, the infrared camera of the imaging assembly 1 is used to perform liveness detection on the human face image, and the color camera of the imaging assembly 1 synchronously takes a static photo of the human face and transmits the static photo to a comparison system. While the infrared camera performs liveness detection on the human face image, the comparison system compares the obtained static photo with pre-stored human facial information at the same time. Only if the liveness detection is passed and the static photo is matched to the pre-stored human facial information, the door panel of the gate device opens and the person can pass through. If one of the liveness detection and the comparison of the static photo to the pre-stored human facial information fails, the gate device will not open. In some embodiments, the gate device also supports card swiping for passage.

The gate device provided by the embodiment of the present application has the advantages of simple structure, reasonable design and convenient use, and replaces tedious functions such as manual inspection, thereby improving operation efficiency and ensuring passage orderly.

In one implementation, the imaging assembly is arranged on the top surface of the gate device, which leads to the destruction of the overall shape design of the gate device and the inability to be concise and integrated. Moreover, in the case that the imaging assembly is arranged on the top surface of the gate device, only the image above the top surface of the gate device and the image around the gate device can be obtained, but no image of the passage area inside the passage space below the top surface of the gate device can be effectively obtained.

In this regard, the gate device 100 of the present application includes a box body, a door panel connected to the box body and a top cover 30 covering the upper end of the box body. The box body includes a box body shell, which encloses to form the box body and includes a top beam 20, as shown in Figs. 1A, 1B and 2. The box body shell is used for accommodating a core assembly, and one side of the plane where the box body is located is a passage space A for passage of a passing object. It should be noted that the core assembly is a variety of components arranged in the box body shell, including but not limited to a cable, a shaft (described below), an imaging assembly, a control assembly, etc.

In some examples, as shown in Fig. 2, the core assembly includes a shaft 13. In some embodiments, the shaft 13 is located inside the core assembly. In some embodiments, the shaft may be partially or completely exposed.

In some examples, as shown in Fig. 1B, the core assembly includes an imaging assembly 1, which includes a camera, wherein the camera is arranged towards the direction of the entrance of the passage space, and arranged at a position lower than the plane where the top cover is located in order to obtain an image of the passing object.

In some examples, as shown in Figs. 1A and 1B, the top cover 30 covers the top beam 20. In some embodiments, the upper surface of the top cover 30 is substantially flush. In some embodiments, the upper surface of the top cover 30 is the highest among all components of the gate device.

In this embodiment, the camera is arranged towards the direction of the entrance of the passage space and arranged at a position lower than the plane where the top cover is located. The structure of top surface of the gate device is simplified and the overall shape design is more concise compared to the imaging assembly arranged on the top surface of the gate device. Moreover, the imaging assembly 1 can further obtain the image of the passing area located inside the passage space A of the gate device, increasing the field of view angle of the imaging assembly 1 for acquiring an image, and thereby increasing the effective recognition and detection area of the gate device.

In some examples, the box body shell includes a protrusion 10 that extends outwards along the direction from the plane where the box body is located toward the passage space. The protrusion is entirely located below the upper surface of the top cover in the vertical direction. A cavity for accommodating the imaging assembly is provided in the protrusion, and the imaging assembly is entirely or partially placed inside the cavity. A hole is provided on the protrusion 10, and the camera collects the image through the hole.

In some examples, as shown in Fig. 2, the imaging assembly 1 is located above the shaft 13. In some embodiments, the protrusion 10 may have an accommodation space, and the imaging assembly 1 and the shaft are both located in the accommodation space. In some embodiments, the protrusion 10 may include a hollow column, and the inner cavity of the hollow column may serve as the accommodation space. In some embodiments, the accommodation space may be located in the middle of the protrusion 10 and closer to the top cover. In some embodiments, the accommodation space is located at the top end of the protrusion.

The imaging assembly 1 and the shaft 13 are located on the same side of the top beam 20 along the axial/longitudinal direction where the top beam 20 extends. It should be noted that the imaging assembly 1 and the shaft 13 being located on the same side of the top beam 20 means that the imaging assembly 1 and the shaft 13 are not located on the opposite sides of the top beam 20. Due to that along the extension direction of the shaft 13, the extension of shaft 13 may be partially connected to or abut against the top beam 20, in this case, the shaft 13 and the imaging assembly 1 are located on the same side of the top beam 20 when viewed from one side of the top beam 20 away from the shaft 13. The location on the same side of the top beam 20 should mean that they are not located on the opposite sides of the top beam 20, including the case of partial connection to the top beam 20.

It should be noted that the shaft 13 of the core assembly is used to drive the door panel of the gate device to rotate, thereby intercepting and diverting passing person/vehicle. Therefore, the shaft 13 is located on one side of the passage close to the gate device.

Exemplarily, there is an angle between the orientation of the camera of the imaging assembly 1 and the extension direction of the top beam 20, and the camera of the imaging assembly 1 is oriented toward a side away from the top cover 30.

In some embodiments, as shown in Figs. 1A and 1B, the gate device further includes a light supplementing lamp 2 and a display screen 3.

For example, the light supplementing lamp 2 is used to provide sufficient light for the imaging assembly 1 to improve the effectiveness and accuracy of face recognition by the camera.

For example, when a person is going to pass the gate device, the light supplementing lamp 2 supplements light for the infrared camera of the imaging assembly 1, so that the infrared camera of the imaging assembly 1 performs liveness detection on the human face. When the color camera of the imaging assembly 1 takes a static picture of the human face, the color camera correspondingly adjusts the ISP exposure parameters in the image to solve the problem of overexposure of the human face in the image if the human face is in an environment with a backlight. When the gate device is in a low illumination environment and the visible light illumination is insufficient, the image will have large amount of noises that affect the clarity of the collected image and cannot be used for human face recognition. At this time, the algorithm is switched to use the infrared camera of the imaging assembly 1 for recognition, wherein the infrared camera simultaneously completes human facial information collection and liveness detection.

Exemplarily, the light supplementing lamp 2 may include an infrared light-emitting diode. One infrared light-emitting diode or multiple infrared light-emitting diodes may be provided. If there is only one infrared light-emitting diode, the angle at which the infrared light-emitting diode irradiates the human face may be set in the direction close to the camera of the imaging assembly 1. If there are multiple infrared light-emitting diodes, the light beams emitted by respective infrared light-emitting diodes converge to supplement light for the human face.

In some embodiments, the light supplementing lamp 2 further includes a visible light supplementing lamp, such as a visible light-emitting diode. In a low illumination environment, visible light illumination is insufficient, and the visible light supplementing lamp can supplement light for the visible light camera to ensure the quality of the visible light image, thereby facilitating human face recognition.

Exemplarily, the display screen 3 is used for displaying image, information, and/or giving feedback on the recognition detection results, such as an image comparison results or prompt information.

For example, according to the received image information, the display screen 3 can display human facial information, such as at least one of the taken image, the name of the recognized person, a pre-stored image for the recognized person, etc. Alternatively, when the information comparison fails, a processor or a mainboard (as described below) transmits a signal prompting to adjust orientation and position to the display screen 3, and the display screen displays information prompting the passing person to adjust his/her orientation and position according to the received signal prompting to adjust orientation and position. It is not limited in the embodiments of the present application. In an embodiment, the core assembly of the gate device may include a speaker, which may receive a signal from the processor or the mainboard. The speaker may broadcast a voice prompt information to the person, such as please pass or verification failed, please adjust your body orientation, etc. In some embodiments, the speaker is arranged in the box body shell of the gate device close to the entrance of the passage space.

Exemplarily, the display screen 3 may be a touch display screen.

In one implementation, the imaging assembly, the infrared light supplementing lamp and the display screen are integrated into a convex plate on the top surface of the gate device, which leads to the destruction of the overall shape design of the gate device and the inability to be concise and integrated. In addition, the image of the passing area under the top surface inside the gate device passage cannot be effectively obtained.

Different from the above-mentioned implementation, in some embodiments of the present application, the light supplementing lamp 2 is oriented toward the direction of the entrance of the passage space and is arranged at a position lower than the plane where the top cover is located.

In some embodiments, the light supplementing lamp 2 is located between the top beam 20 and the top cover 30, as shown in Fig. 1B.

In some embodiments, the display screen 3 is located between the top beam 20 and the top cover 30, as shown in Fig. 1B.

In some examples, as shown in Fig. 1A, the top cover 30 has a first light transmission portion 31 and a second light transmission portion 32 which are spaced apart.

Exemplarily, the first light transmission part 31 corresponds to the light supplementing lamp 2.

For example, the first light transmission portion 31 is used to transmit the light emitted by the light supplementing lamp 2.

For example, the light emitted by the light supplementing lamp 2 is infrared light. For a further example, the light emitted by the light supplementing lamp 2 is infrared light.

Exemplarily, the second light transmission portion 32 corresponds to the display screen 3.

For example, the second light transmission portion 32 is used to transmit the image, information, etc. displayed on the display screen 3.

In some examples, as shown in Fig. 1A, the top cover 30 has a card swiping area 33, which is located on the side of the top cover 30 closer to the entrance of the passage space of the gate device.

For example, the light supplementing lamp 2 is closer to the card swiping area 33 than the imaging assembly 1.

Thus, the gate device not only integrates the functions such as detection, recognition, infrared light supplementing, display feedback and so on; but also can effectively utilize the internal space of the gate device by means of the layout of disintegrating the imaging assembly 1, the light supplementing lamp 2 and the display screen 3, thereby saving more installation space, and enabling the gate device to be more compact. Compared to the integrated placement of the imaging assembly 1, the light supplementing lamp 2 and the display screen 3 on a convex plate on the top surface of the gate device, the layout of disintegrating the imaging assembly 1, the light supplementing lamp 2 and the display screen 3 achieves a more reasonable layout of the imaging assembly 1, the light supplementing lamp 2 and the display screen 3, which reduces the structure complexity of the top surface of the gate device and avoids rubbing clothes, pendants, and packages of the passing person when passing through the passing area inside the passage of the gate device, thereby further improving the user experience.

In some embodiments, as shown in Figs. 1A and 1B, the shape formed by the connecting lines between the display screen 3, the light supplementing lamp 2 and the imaging assembly 1 are triangular.

In some examples, there is an angle between the light supplementing lamp 2 and the horizontal plane, and the light supplementing lamp 2 is oriented toward a position between the imaging assembly 1 and the display screen 3.

For example, the angle between the light supplementing lamp 2 and the horizontal plane and the position toward which the light supplementing lamp 2 is oriented between the imaging assembly 1 and the display screen 3 can be set according to actual needs.

Exemplarily, the light supplementing lamp 2 is used to supplement light for the human face of a passing person. The light supplementing lamp 2 can supplement light for the human face of a passing person whose height is within a set height range by adjusting the angle between the light supplementing lamp 2 and the horizontal plane and the position toward which the light supplementing lamp 2 is oriented between the imaging assembly 1 and the display screen 3, thereby enabling the gate device to recognize the human face of the passing person whose height is within the set height range. In other words, the light supplementing range of the light supplementing lamp overlaps with the field of view of the camera at least in the passing recognition area in front of and in the passage of the gate device.

For example, if the gate device is set to collect the human facial information of the passing person with a height of 1.2m to 1.9m, the light supplementing lamp 2 can supplement light for the infrared camera of the imaging assembly 1 by adjusting the angle between the light supplementing lamp 2 and the horizontal plane and the position toward which the light supplementing lamp 2 is oriented between the imaging assembly 1 and the display screen 3, so that the infrared camera of the imaging assembly 1 may perform liveness detection on the human face of passing person with a height of 1.2m to 1.9m. Moreover, the light of the light supplementing lamp 2 can be irradiated to the passing area inside the gate device passage by setting the angle between the light supplementing lamp 2 and the horizontal plane and the position toward which the light supplementing lamp 2 is oriented between the imaging assembly 1 and the display screen 3, so that the infrared camera of the imaging assembly 1 may further perform liveness detection on the human face of person in the passing area inside the passage of the gate device.

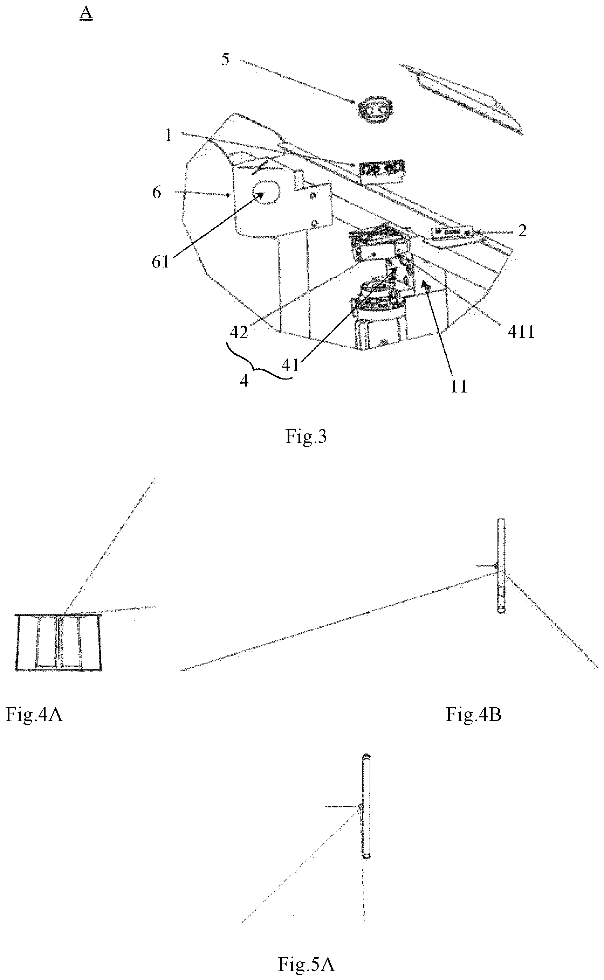

In one embodiment, at the angle/orientation as shown in Figs. 4A and 4B, the light supplementing range of the light supplementing lamp can cover a large range inside the passage of the gate device and in front of the gate device.

In some examples, the gate device further includes multiple infrared sensors.

Exemplarily, the infrared sensors can be used to detect the passing status of person in the passage of the gate device in real time.

Exemplarily, the light supplementing lamp 2 is located between the top beam 20 and the top cover 30, which can also prevent the light emitted by the light supplementing lamp 2 from interfering with the infrared sensor inside the passage of the gate device, thereby making the detection information of the gate device more accurate.

In some embodiments, the camera of the imaging assembly 1 is tilted upward, and the angle between the orientation of the camera of the imaging assembly 1 and the extension direction of the top beam 20 is an acute angle, and the camera of the imaging assembly 1 is oriented toward the side away from the top cover 30.

Exemplarily, the "camera of the imaging assembly 1" may include both the color camera and the infrared camera of the imaging assembly 1.

For example, the gate device is set, so that the gate device can collect the human facial information of passing person with a height of 1.2m to 1.9m. The infrared camera of the imaging assembly 1 may perform liveness detection on the human face of passing person with a height of 1.2m to 1.9m who is in front of or inside the passage A of the gate device by tilting the camera of the imaging assembly 1 upwards and orienting the camera of the imaging assembly 1 toward the side away from the top cover 30. The color camera of the imaging assembly 1 synchronously takes the static photo of the human face of passing person with a height of 1.2m to 1.9m who is in front of or inside the passage of the gate device.

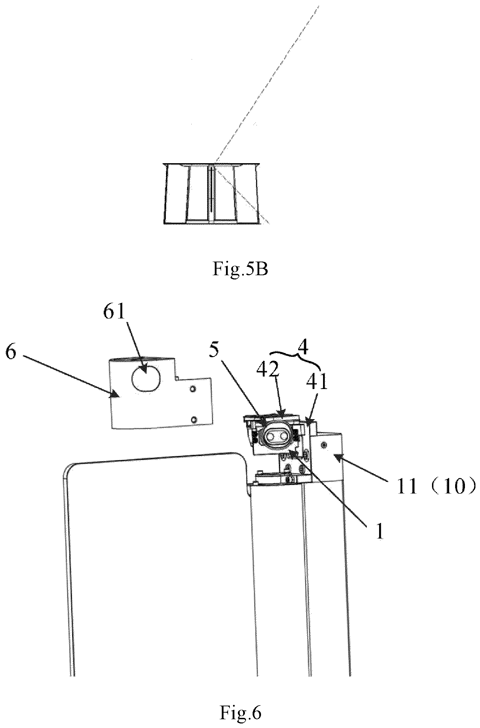

In some embodiments, under the orientation/angle of the imaging assembly as shown in Figs. 5A and 5B, the field of view range of the camera covers a large space inside the passage of the gate device and in front of the gate device.

In some embodiments, as shown in Fig. 1B, the top cover 30 includes a top cover plate 310 and a shading layer 320 located on one side of the top cover plate 310. In some embodiments, the top cover plate is made of glass.

In some examples, the shading layer 320 has a first opening and a second opening. The portion of the top cover plate 310 corresponding to the first opening forms the first light transmission portion 31, and the portion of the top cover plate 310 corresponding to the second opening forms the second light transmission portion 32.

For example, the shading layer 320 may be a black ink layer. As a further example, the shading layer 320 is a black acrylic layer 321, as shown in Fig. 1B. It is not limited in the embodiments of the present application.

In some embodiments, as shown in Fig. 2, Fig. 3 and Fig. 6, the core assembly of the gate device further includes a camera mounting bracket 4.

In some examples, as shown in Figs. 3 and 6, the camera mounting bracket 4 is located on a side of the top end 11 of the protrusion 10.

For example, the camera mounting bracket 4 may be fixed to the side of the top end 11 of the protrusion 10 by screws. The camera mounting bracket 4 and the top end 11 of the protrusion 10 may also be fixedly connected by other means, which is not limited by the embodiment of the present application.

Exemplarily, the camera is fixed on the camera mounting bracket 4, and the camera mounting bracket 4 may provide a certain support for the camera.

In some examples, as shown in Fig. 6, the camera sealing assembly 5 is snap-fitted on the camera of the imaging assembly 1.

Exemplarily, the position in the camera sealing assembly 5 corresponding to the camera of the imaging assembly 1 may be made of an anti-fog transparent material.

Exemplarily, the camera sealing assembly 5 is used to completely seal the camera of the imaging assembly 1 to isolate water vapor and dust from entering the camera, avoiding affecting the quality of the image obtained by the imaging assembly 1.

In some examples, the protrusion further includes a camera decorative cover 6, which is arranged outside and covers the camera mounting bracket 4, the imaging assembly 1 and the camera sealing assembly 5.

Exemplarily, the camera decorative cover 6 has a third opening 61. A portion of the camera sealing assembly 5 extends out of the camera decorative cover 6 through the third opening 61.

Exemplarily, the camera decorative cover 6 is connected to the top end 11 of the protrusion 10 by a hexagon socket screw. The camera decorative cover 6 and the top end 11 of the protrusion 10 may also be fixedly connected by other means. It is not limited in the embodiments of the present application.

Exemplarily, the camera decorative cover 6 may be made of materials such as polymer polyethylene layer, carbon fiber mesh layer, heat-resistant resin layer, glass fiber mesh layer. In this way, the strength and impact resistance of the camera decorative cover 6 can be ensured, so that the camera decorative cover 6 can better protect the imaging assembly 1 and other assemblies.

In this embodiment, the imaging assembly 1 is installed inside the camera decorative cover 6, and sealed by the camera sealing assembly 5, so that the imaging assembly 1 has high waterproof grade and good waterproof performance, enabling the imaging assembly 1 to be protected under open air or adverse conditions, thereby ensuring the operation performance of the imaging assembly 1 and prolonging the service life. Moreover, the imaging assembly 1 is mounted on a side of the top end 11 of the protrusion 10 through the camera mounting bracket 4, enabling the imaging assembly 1 to collect the human face image of the passing person through the opening 61 on the camera decorative cover 6, thereby realizing the detection and recognition functions of the gate device.

In some embodiments, as shown in Figs. 3 and 6, the camera mounting bracket 4 includes a first limiting assembly 41 and a second limiting assembly 42.

Exemplarily, as shown in Fig. 6, the first limiting assembly 41 is located on a side of the top end 11 of the protrusion 10, and the first limiting assembly 41 is fixedly connected to the top end 11 of the protrusion 10.

For example, the first limiting assembly 41 may be clamped on a side of the top end 11 of the protrusion 10.

In a further example, the first limiting assembly 41 is connected to the top end 11 of the protrusion 10 by a hexagon socket screw. The first limiting assembly 41 and the top end 11 of the protrusion 10 may also be fixedly connected by other means. It is not limited in the embodiments of the present application.

Exemplarily, as shown in Figs. 3 and 6, the second limiting assembly 42 is located on one side of the first limiting assembly 41.

Exemplarily, the second limiting assembly 42 is fixedly connected to the first limiting assembly 41.

Exemplarily, the first limiting assembly 41 is perpendicular to the second limiting assembly 42.

Exemplarily, as shown in Fig. 6, the imaging assembly 1 is fixedly connected to the second limiting assembly 42.

Exemplarily, the imaging assembly 1 and the second limiting assembly 42 may be connected by a hexagon socket screw. The imaging assembly 1 and the second limiting component 42 may also be fixedly connected by other means. It is not limited in the embodiments of the present application.

In this embodiment, the imaging assembly 1 is fixed on a side of the top end 11 of the protrusion 10 by setting the first limiting assembly 41 and the second limiting assembly 42, enabling the imaging assembly 1 to further obtain the image of the passing area inside the gate device passage, increasing the field of view angle of the image obtained by the imaging assembly 1, and thereby increasing the effective recognition and detection area of the gate device.

In some embodiments, the gate device further includes a mainboard.

In some examples, the gate device may further include one or more of a direction indicator, a motor driver, a counter, or an alarm.

Exemplarily, the mainboard is the control center of the gate device, which is used to receive and perform signal processing, and then issue execution instructions to the direction indicator, the motor driver, the counter or the alarm of the gate device.

Exemplarily, the motor driver receives the signal sent from the mainboard, controls the operation of the switch and the motor, and realizes the opening or closing of the gate device. A driving shaft of the motor is connected to the core assembly to drive the door panel of the gate device to move. The control assembly described above may include at least one of the mainboard, the motor driver, the switch or the motor.

Exemplarily, the direction indicator is used to display the current state of the passage of the gate device and guide passing person to pass in an orderly and safe manner. In some embodiments, the direction indicator is arranged on the core assembly for convenient viewing by passing person.

Exemplarily, the counter is used to effectively record the number of passing persons passing from the same direction.

Exemplarily, the alarm may be an acousto-optic alarm device, which is used to issue an alarm indication signal when a person illegally passes through (for example, jumps over) the passage of the gate device.

In some examples, the gate device further includes a data transmission line.

In some examples, as shown in Figs. 2 and 3, a camera assembly wiring hole 411 is provided on the first limiting assembly 41.

Exemplarily, one end of the data transmission line is connected to the imaging assembly 1, and the other end of the data transmission line is connected to the mainboard through the camera assembly wiring hole 411.

Exemplarily, one or more camera interfaces are provided on the mainboard, and the other end of the data transmission line is connected to the camera interface(s) on the mainboard passes through the camera assembly wiring hole 411. In this way, the human face image obtained by the imaging assembly 1 may be transmitted to the mainboard of the gate device through the data transmission line.

In some examples, one or more display screen interfaces are also provided on the mainboard.

Exemplarily, the display screen 3 and the mainboard may also be connected through a data line, so that the mainboard may instruct the display screen to display image and information.

In some embodiments, as shown in Figs. 1A and 1B, the gate device further includes a side barrel assembly 40.

In some examples, as shown in Figs. 1A and 1B, two side barrel assemblies 40 of each box body are located at opposite ends of the top beam 20.

Exemplarily, two side barrel assemblies 40 are parallel to each other.

Exemplarily, two side tub assemblies 40 form a trapezoid with the bottom surface and the top cover.

Exemplarily, the side barrel assembly 40 may be arranged in an integrated-formed structure, and the side barrel assembly 40 with the integrated-formed structure has higher strength and better structure stability; or, the side barrel assembly 40 may include multiple assemblies, which form the side barrel assembly 40, and each assembly has a smaller volume and is more convenient to manufacture.

Exemplarily, the top beam 20 is arranged on and connected to two side barrel assemblies 40, and the two side barrel assemblies 40 can provide support for the top beam 20.

In some embodiments, an arc-shaped carrying handle is connected to the top ends of two side surfaces of the box body shell that intersect with the plane where the box body is located, and the top cover covers the carrying handle.

In some embodiments, as shown in Figs. 7 and 8, the gate device 100 further includes a carrying handle 50 fixedly connected to the side barrel assembly 40.

Exemplarily, the carrying handle 50 is located at one end of the side barrel assembly 40 close to the top cover 30 and at one side of the side barrel assembly 40 away from the top beam 20.

Exemplarily, the number of carrying handles 50 on each box body is two.

Exemplarily, one end of the carrying handle 50 is fixedly connected to the side barrel assembly 40, and the end of the carrying handle 50 away from the side barrel assembly 40 abuts against the top cover 30.

Exemplarily, the top cover 30 covers two side barrel assemblies 40 and two carrying handles 50. Therefore, both the two side barrel assemblies 40 and the two carrying handles 50 may provide support for the top cover 30.

It should be noted that during the transportation or manufacturing of the gate device, it is generally carried manually. Due to the heavy weight of the gate device itself, manual carrying is laborious. Generally, the carrying person need to find the force application points on the gate device when carrying, such as the top beam or the top cover, which is more likely to damage the overall component of the gate device. In addition, it is inconvenient to carry, and there are certain safety hazards.

In the embodiment of the present application, the carrying handle(s) 50 is/are provided on the side of the side barrel assembly 40 close to the top cover 30 to facilitate person to carry the gate device and improve the carrying efficiency. It not only effectively ensures the safety of production and construction persons and the gate device itself, but also avoids damaging the outer surface of the gate device.

In some embodiments, the carrying handle 50 is stainless steel castings.

It should be noted that the stainless steel castings means that the stainless steel molten metal is cast into the mold until it solidifies and forms. In this way, the structure of the carrying handle 50 can be more stable, and the hardness of the carrying handle 50 can be improved by casting stainless steel. When the production and construction persons carry the gate device, the carrying handle 50 is hard to break even if the carrying handle 50 bears a large force, thereby effectively ensuring the safety of the carrying person and the gate device itself during the carrying process.

In some embodiments, as shown in Fig. 6, the gate device further includes a bearing member 60.

Exemplarily, the bearing member 60 surrounds the edge of the carrying handle 50.

Exemplarily, the bearing member 60 is fixedly connected to the carrying handle 50.

Exemplarily, the bearing member 60 abuts against the top cover 30, and the top cover 30 further covers the bearing member 60, and the bearing member 60 may provide support for the top cover 30.

Exemplarily, the bearing member 60 is used to bear a certain force when the production and construction persons carry the gate device.

In some embodiments, the material of the bearing member 60 includes acrylic.

It should be noted that acrylic is also called as PMMA or plexiglass. Acrylic is a kind of polymer thermoplastic material that is easy to process and mold. The molding methods of acrylic material mainly include casting molding and extrusion molding. After molding, acrylic material may be further made into various shapes by reheating and softening. Acrylic has good chemical stability and weather resistance, and is highly adaptable to the natural environment. Even if it is exposed to sunlight, wind and rain for a long time, its performance will not change. It has good aging resistance and can be used safely outdoors. Moreover, the bearing member 60 made of acrylic material may be polished, ground, etc., so that the surface of the bearing member 60 is smoother and the appearance is more beautiful.

Exemplarily, the overall appearance design of the bearing member 60 and the carrying handle 50 adopts the design concept of the traditional Chinese eaves structure, which not only has a beautiful appearance, but also provides an ergonomic force applying position for the carrying handles, by means of which the carrying required for the installation and transportation of the gate device can be completed.

In some embodiments, the thickness of the bearing member 60 ranges from 10 mm to 20 mm. For example, the thickness of the bearing member 60 may be 10mm, 12mm, 14mm, 16mm, 18mm, 20mm, etc.

Therefore, the thickness of the bearing member 60 ranges from 10 mm to 20 mm, which not only enables the thickness of the bearing member 60 to be thinner, but also enables the overall structure of the gate device to be more beautiful. In addition, the bearing member 60 is hard. When the production and construction persons carry the gate device, the bearing member 60 is hard to break even if the bearing member 60 bears a large force.

In some embodiments, as shown in Fig. 2, the core assembly further includes a core frame 12 and a core door column swivel tube 14.

Exemplarily, the shaft 13 is arranged on one side of the core frame 12.

Exemplarily, the number of shafts 13 may be one or more. For example, when the number of shafts 13 is one, the gate device is a single-core swing gate device; when the number of shafts 13 is two, the gate device is a double-core swing gate device. In the embodiment of the present application, one shaft 13 is taken as an example for schematic description.

Exemplarily, the core door column swivel tube 14 is sleeved on the shaft 13. Therefore, the core door column swivel tube 14 may protect the shaft 13, so that the shaft 13 has high waterproof grade and good waterproof performance, enabling the shaft 13 to be protected under open air or inverse conditions, thereby ensuring that the shaft 13 works stably.

In some examples, as shown in Fig. 2, the core door column swivel tube 14 has a fourth opening 141.

Exemplarily, as shown in Fig. 2, the gate device 100 further includes a door panel 70.

Exemplarily, the door panel 70 may be an acrylic door, which is lighter, more beautiful and safer.

Exemplarily, the door panel 70 is used for blocking when the person is not allowed to pass, and opening when the person is allowed to pass.

Exemplarily, the door panel 70 may be one of a swing gate device, a wing gate device and a sliding gate device. For example, the door panel 70 may be a swing gate device as shown in Fig. 2.

In some examples, a portion of the door panel 70 extends into the fourth opening 141, is connected to the shaft 13, and can rotate along with the rotation of the shaft 13. In this way, when the information comparison of the passing person fails, the shaft 13 will not drive the door panel 70 to rotate, so that the door panel 70 can block the passing person; when the information comparison of passing person is passed, the shaft 13 drives the door panel 70 to rotate, so that passing person can pass through the passage of the gate device.

Exemplarily, as shown in Fig. 2, a core door wing clamp 15 is provided at the shaft 13. The core door wing clamp 15 can be used to fix the door panel 70 on the shaft 13.

By adopting the above arrangement, the gate device not only enables to manage the passages in public places and to realize the functions such as intercepting and diverting persons, but also enables the core assembly and the door panel to be independent structures and designs, so that the core assembly is convenient to install and debug, and the door panel can simply be fixed on the core assembly when assembling.

The gate device is generally equipped with an infrared camera. In order to ensure better shooting, the gate device is further equipped with an infrared light supplementing lamp, which can supplement light for the shooting of the infrared camera. The gate device involved in the related art is further equipped with an infrared detection component, which detects whether there is a person to be detected in the passage by emitting infrared light and receiving it, and then feeds it back to the mainboard to control the opening and closing of the door panel of the gate device. However, the light supplementing range of the infrared light supplementing lamp overlaps with the detection range of the infrared detection component during operation, and the infrared light emitted by the infrared light supplementing lamp is likely to trigger the infrared detection component by mistake, which easily causes abnormal opening and closing control of the door panel and affects the working stability of the gate device.

In order to avoid interference, the gate device in the related art reduces the field of view angle of the infrared light supplementing lamp to avoid triggering the infrared detection component by mistake. However, in this case, face recognition is subject to limitations due to the small field of view angle of supplementing light of the infrared light supplementing lamp.

In view of this, in some embodiments, the gate device further includes an infrared detection component 400, which emits infrared light of a different wavelength band from that emitted by the infrared light supplementing lamp. In some embodiments, the infrared sensor described above is the infrared detection component 400.

The infrared camera 200 is used to obtain the infrared image of the person to be detected, thereby realizing human face recognition. The light supplementing lamp 2 can emit the first infrared light, which can supplement light for the infrared camera 200, thereby alleviating the problem of poor shooting effect of the infrared camera 200 under the condition of insufficient light.

The infrared detection component 400 can emit second infrared light, which is used to determine whether there is a person to be detected in the gate device passage A by infrared detection. After the person to be detected has passed the verification, the gate device opens and the person can pass through the gate device. If the infrared detection component 400 determines that there is no one in the passage A, it means that the person has left the gate device, and the infrared detection component sends the detection result to the mainboard, so that the mainboard controls the door panel 70 of the gate device to switch to the closed state. It should be noted that the detection process and principle of the infrared detection component 400 and the control of the door panel 70 by the gate device according to the detection result of the infrared detection component 400 are all well-known technologies, and will not be described in detail here.

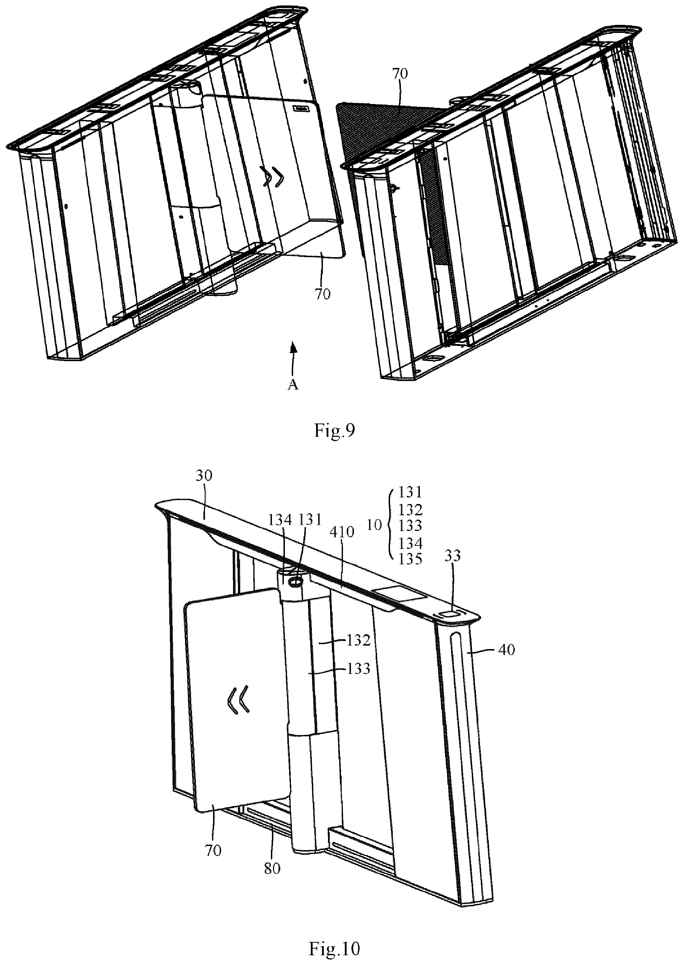

**In** some embodiments, as described above, the light supplementing lamp 2 is located between the top beam and the top cover. **In** some embodiments, as shown in Figs. 9 to 12, the infrared camera 200 and the light supplementing lamp 2 are both arranged in the accommodation space in the protrusion 10. **In** some embodiments, as shown in Fig. 10, when the gate device includes a display screen, only one opening corresponding to the display screen 3 is provided at the top cover 30 covering the top beam 20. **In** some embodiments, the top cover 30 has a card swiping area 33, which is located on the side of the top cover 30 closer to the entrance of the passage of the gate device.

In some embodiments, infrared detection components are arranged at the positions close to the entrance and exit of the gate device. In some embodiments, the infrared detection components are arranged at the positions close to the entrance, exit and the middle position between the entrance and exit of the gate device. In some embodiments, the infrared detection components are arranged at the positions close to the exit and the middle position between the entrance and the exit of the gate device. In some embodiments, in addition to the above positions, the infrared detection component can also be arranged at other position(s), such as the base of the gate device, the side face of the top beam toward the passage space, etc.

As described above, during operation, the light supplementing lamp 2 can emit the first infrared light, and the infrared detection component 400 can emit the second infrared light. The wavelength band of the first infrared light is different from the wavelength band of the second infrared light, that is, the light supplementing lamp 2 emits the first infrared light of the first wavelength band, and the infrared detection component 400 emits the second infrared light of the second wavelength band, and the first wavelength band is different from the second wavelength band. In this case, it is difficult to trigger the infrared detection component 400 even if the first infrared light is projected on the infrared detection component 400, thereby avoiding false detection of the infrared detection component 400.

The gate device disclosed in this embodiment improves the gate device involved in the related art, enabling the wavelengths of the first infrared light emitted by the light supplementing lamp 2 and the second infrared light emitted by the infrared detection component 400 to be different. In this case, the second infrared light operated for the infrared detection component 400 is not the first infrared light emitted by the light supplementing lamp 2, so the infrared detection component will not be interfered by the first infrared light, and finally alleviating the problem that the infrared light emitted by the infrared light supplementing lamp is likely to trigger the infrared detection component by mistake.

In addition, considering that the infrared detection component 400 is hardly interfered by the first infrared light, the light supplementing lamp 2 may be designed with a larger field of view of supplementing light (there is no need to design a smaller field of view of supplementing light to keep away from the infrared detection component 400), thereby providing more powerful light supplementing for the infrared camera 200, which facilitates the infrared camera 200 to recognize the human face in a larger range (for example, the height range for recognizing a human face is 0.7-2m). Of course, since the wavelength band of the first infrared light is different from the wavelength band of the second infrared light, the interference of the second infrared light on the supplementing light of the light supplementing lamp 2 can also be avoided.

In an optional embodiment, the infrared camera 200 and the light supplementing lamp 2 can be fixed in the protrusion 10 in a fixed manner. For example, the infrared camera 200 and the light supplementing lamp 2 can be fixed in the protrusion 10 by bonding, clamping, connecting with a connector (such as a threaded connector) to achieve the installation. The fixed way has the advantage of stability, which can be better maintained in operation state and is hardly affected by environmental vibration.

As described above, the box body is used to form the passage space A of the gate device. In an optional solution, the gate device may include two box bodies which are arranged spaced apart to form the passage space A of the gate device between them. In some embodiments, the box body and a baffle, a wall, etc. arranged opposite to box body together form the gate device, and the passage space A of the gate device is formed between the two.

The infrared detection component 400 includes an infrared emitting subcomponent 410 and an infrared receiving subcomponent 420. The infrared emitting subcomponent 410 and the infrared receiving subcomponent 420 are respectively arranged on two box bodies or on the box body and the baffle, the wall, etc. arranged opposite to box body, and are arranged opposite to each other. During operation, the infrared emitting subcomponent 410 is used to emit the second infrared light, and the infrared receiving subcomponent 420 is used to receive the second infrared light. Under the condition that a person to be detected passes through the gate device passage A, the second infrared light emitted by at least one infrared emitting subcomponent 410 is easily blocked by the person to be detected, thus causing the corresponding infrared receiving subcomponent 420 to fail to receive the second infrared light. In this case, the infrared receiving subcomponent 420 fails to receive the second infrared light, indicating that there is someone in the passage. Under the condition that no one passes through the gate device passage A, the second infrared light emitted by each infrared emitting subcomponent 410 is not blocked, thereby allowing each infrared receiving subcomponent 420 to receive the second infrared light. In this case, the infrared receiving subcomponent 420 receives the second infrared light indicating that there is no one in the passage, which will trigger the door panel 70 of the gate device to switch to the closed state.

If the wavelength band of the first infrared light is the same as that of the second infrared light, the first infrared light emitted by the light supplementing lamp 2 is likely to be received by the infrared receiving subcomponent 420, resulting in false triggering. In this regard, as described in this embodiment, the wavelength bands of the first infrared light and the second infrared light are different, that is, the first wavelength band and the second wavelength band are different, which can alleviate mutual interference.

It should be noted that the first wavelength band and the second wavelength band being different may refer to that the wavelength ranges corresponding to the first wavelength band and the second wavelength band do not overlap at all. For example, the wavelength range corresponding to the first wavelength band may be 780 nm to 835 nm, and the wavelength range corresponding to the second wavelength band may be 840nm to 860 nm. The first wavelength band and the second wavelength band being different may refer to that the wavelength ranges corresponding to the first wavelength band and the second wavelength band partially overlap. For example, the wavelength range corresponding to the first wavelength band may be 780 nm to 835 nm, and the wavelength range corresponding to the second wavelength band may be 830 nm to 860 nm.

If the wavelength range corresponding to the first wavelength band and the second wavelength band partially overlap, that is, there may be a small amount of second infrared light of the second wavelength band existed in the first infrared light of the first wavelength band. In order to further alleviate the mutual interference, the infrared detection component 400 disclosed in this embodiment may further include a filter 430, which covers the infrared receiving subcomponent 420 and is used to allow the second infrared light to pass through and prevent the first infrared light from passing through. The filter 430 may be a narrow-band filter. The filter 430 is used to allow the second infrared light with a wavelength close to the peak in the second wavelength band to pass through, while being able to prevent most of second infrared light away from the peak from passing through, and being able to prevent the first infrared light. In this case, the filter 430 facilitates to filter out the second infrared light existing in the first infrared light of the first wavelength band, and the narrow-band filter enable the wavelength band of the second infrared light operated for the infrared detection component 400 narrower, which can further alleviate the interference of the first infrared light. In this way, the interference between the light supplementing lamp 2 and the infrared detection component 400 may be further alleviated, thereby facilitating to avoid false triggering of the infrared detection component 400.

In one embodiment, each of the heights of the infrared emitting subcomponent 410 and the infrared receiving subcomponent 420 may be equal to achieve a better relative arrangement. Each of the heights of the infrared emitting subcomponent 410 and the infrared receiving subcomponent 420 may be different from that of the light supplementing lamp 2. This layout can avoid the spatial overlap of the first infrared light and the second infrared light, thereby achieving the purpose of better avoiding mutual interference.

The gate device may further include a base 80, which is generally fixed on the ground to realize the installation of the gate device. The top beam 20 is located above the base 80. In some embodiments, the infrared detection component 400 is arranged on the side surface of the top beam 20 towards the passage. In this case, the infrared detection component 400 can be arranged on the side surface of the top beam 20 to avoid affecting the appearance perception of the entire gate device. This arrangement can also better avoid the exposure of a large area of the infrared detection component 400, thereby preventing the infrared detection component 400 from being damaged. The infrared emitting subcomponent 410 and the infrared receiving subcomponent 420 are respectively arranged on the sides of the top beams 20 of the two box bodies.

The gate device further includes a support column arranged between the two ends of the top beam 20 and the two ends of the base 80. In some embodiments, the infrared detection component is arranged on the support column close to the entrance and exit of the gate device passage and closer to the top beam than the base.

In some embodiments, the infrared detection components may be arranged at both of the above two positions. In some embodiments, in addition to the above positions, the infrared detection component may also be arranged at other positions.

If the light supplementing lamp 2 and the infrared camera 200 are arranged on the top cover 30, it will reduce the appearance perception of the gate device and destroy the overall shape design of the gate device, and in addition, it is more likely to be rubbed. In this regard, the light supplementing lamp 2 and the infrared camera 200 are arranged towards the entrance of the passage space, and at a position below the plane where the top cover is located, which facilitates to improve the appearance performance of the gate device. In addition, the infrared camera 200 may further obtain the image of the passing area inside the gate device passage space A, increasing the field of view angle of the infrared camera 200 to obtain the image, and thereby increasing the effective recognition and detection area of the gate device.

In some embodiments, the protrusion 10 may have an accommodation space, and the protrusion 10 may include a light transmission cover plate 131 oriented toward the entrance of the passage. In some embodiments, the light supplementing lamp 2 and the infrared camera 200 are both arranged in the accommodation space and oriented toward the light transmission cover plate 131. The first infrared light emitted by the light supplementing lamp 2 can pass through the light transmission cover plate 131 for supplementing light. The infrared camera 200 can shoot through the light transmission cover plate 131. The infrared camera 200 and the light supplementing lamp 2 can be built into the accommodation space of the protrusion 10 without affecting their operations, enabling the infrared camera 200 and the light supplementing lamp 2 to be well protected, and alleviating the problem that the infrared camera 200 and the light supplementing lamp 2 are likely damaged when they are installed outside.

In addition, the infrared camera 200 and the light supplementing lamp 2 being arranged in the accommodation space facilitates a more compact layout and installation. At the same time, the infrared camera 200 and the light supplementing lamp 2 being installed in the same accommodation space facilitates the modular design of the two and the overall disassembly and assembly.

The structure of the protrusion 10 may be varied. For example, the protrusion 10 may include a hollow column. The inner cavity of the hollow column may be used as the accommodation space. A hole is provided on the hollow column, and the light transmission cover plate 131 is installed in the hole. The infrared camera 200 and the light supplementing lamp 2 may be installed in the inner cavity of the hollow column, thereby realizing the built-in installation in the protrusion 10. The light transmission cover plate 131 may be a glass cover plate or a resin cover plate, and may be fixed to the hole by clamping, bonding, etc., thereby realizing the blocking of the hole. In some embodiments, the top end of the protrusion 10 has a hollow cavity as the accommodation space. A hole is provided on the hollow cavity, and the light transmission cover plate 131 is installed in the hole. The infrared camera 200 and the light supplementing lamp 2 may be installed in the accommodation space. In some embodiments, the middle of the protrusion 10 has a hollow cavity as the accommodation space. A hole is provided on the hollow cavity, and the light transmission cover plate 131 is installed in the hole. The infrared camera 200 and the light supplementing lamp 2 may be installed in the accommodation space.

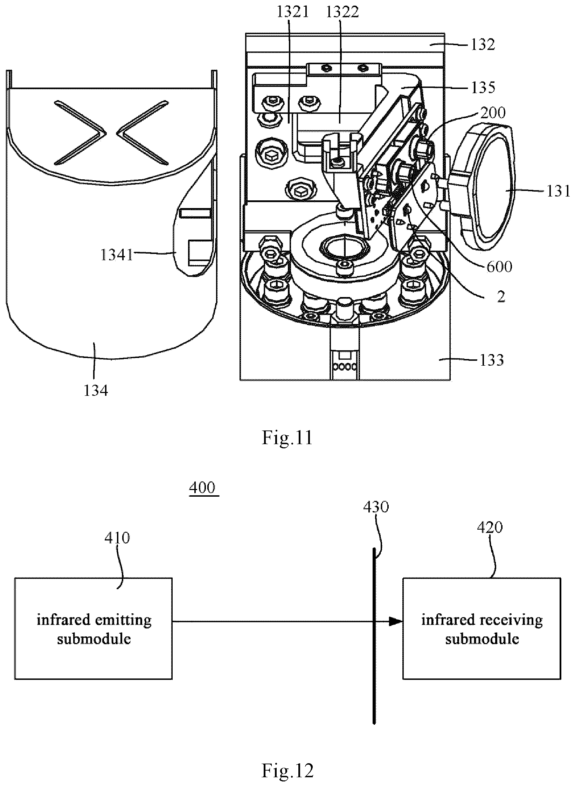

Referring to Fig. 10 and Fig. 11, in further embodiments, the core assembly may include an upright post 132, an installation shaft 133 and a housing 134. The upright post 132 is arranged between the top beam 20 and the base 80. The installation shaft 133 is installed on the upright post 132. The gate device further includes the door panel 70, which is connected to the installation shaft 133 and can rotate relative to the upright post 132 to open or close the gate device passage A. In other words, the door panel 70 rotates relative to the upright post 132 to switch between the open state and the closed state.

The top end of the installation shaft 133 is lower than the top beam 20. It should be noted that the top end of the installation shaft 133 is the end of the installation shaft 133 adjacent to the top beam 20. The portion of the upright post 132 higher than the top end of the installation shaft 133 has an inner surface 1321 towards the gate device passage A. The inner surface 1321 and the end surface of the top end of the installation shaft 133 enclose to form an installation space. Both the light supplementing lamp 2 and the infrared camera 200 are installed in the installation space, and the housing 134 is connected to the installation shaft 133 or the upright post 132 and is arranged on and covers the installation space to form accommodation space. The light transmission cover plate 131 is installed on the housing 134. The existing space between the top end of the installation shaft 133 and the top beam 20 can be fully utilized to install the light supplementing lamp 2 and the infrared camera 200, thereby achieving the purpose of full utilization the space.

In a further technical solution, the light transmission cover plate 131 may be detachably installed on the housing 134 to facilitate disassembly and replacement. A hole 1341 is provided on the housing 134, and the light transmission cover plate 131 is detachably installed in the hole 1341. The light transmission cover plate 131 is detachable, which facilitate partially disassembled for maintenance without major disassembly and assembly. The housing 134 may also be detachably fixed on the installation shaft 133 or the upright post 132 by means of snaps, threaded connectors, etc., to facilitate the opening of the installation space.

As described above, the infrared camera 200 and the light supplementing lamp 2 may be installed in the accommodation space by various means. In an optional solution, the core assembly may further include a mounting bracket 135. The first end of the mounting bracket 135 is fixed to the inner surface 1321, and the second end of the mounting bracket 135 is suspended in the accommodation space. Both the light supplementing lamp 2 and the infrared camera 200 are arranged at the second end of the mounting bracket 135. The first end of the mounting bracket 135 may be fixed in the inner surface 1321 by means of threaded connector, adhesive, etc. In this embodiment, the influence of the infrared camera 200 and the light supplementing lamp 2 on the mounting shaft 133 can be well avoided by means of a suspended arrangement.

When the light supplementing lamp 2 is located between the top beam and the top cover, the infrared camera 200 is arranged in the above-mentioned accommodation space. Except for no infrared light supplementing lamp in the accommodation space, the other structures are the same as the above situation, and the details can be referred to the above description, which will not be repeated here.

Both the infrared camera 200 and the light supplementing lamp 2 need power supply during operation. In this regard, in an optional solution, a wiring hole 1322 that runs from the inner surface 1321 to the outer surface may be provided on the upright post 132, wherein the outer surface is the surface of the upright post 132 away from the gate device passage A. Furthermore, the gate device in this embodiment may further include a wire, which can be a power supply wire or a communication wire. The wire passes through the wiring hole and extends into the accommodation space, and is electrically connected to the light supplementing lamp 2 and the infrared camera 200. This method of wiring from the side of the upright column 132 away from the gate device passage A prevents the wiring from affecting the appearance of the gate device.

The gate device disclosed in this embodiment may further include a visible light camera 600. The visible light camera 600 is arranged in the accommodation space. In some embodiments, the visible light camera 600 and the infrared camera 200 are oriented in the same direction. In some embodiments, the field of views of the visible light camera 600 and the infrared camera 200 overlap at the entrance of the passage space. In some embodiments, the visible light camera 600 and the infrared camera 200 are arranged side by side. The visible camera 600 is used to obtain a RGB image and the infrared camera 200 is used to obtain an IR image. The combination of the visible camera 600 and the infrared camera 200 can further improve the image collection quality of the gate device and the human face recognition effect. At the same time, the visible light camera 600 is also arranged in the accommodation space to avoid exposure, further improving the appearance of the gate device.

In an embodiment, the light supplementing lamp 2 and the infrared camera 200 may be distributed in the height direction of the protrusion 10. In this case, the light supplementing lamp 2 and the infrared camera 200 can make full use of the space in the height direction of the protrusion 10, which facilitates the design of the protrusion 10 to be thinner and less bloated. In the further technical solution, the height of the infrared camera 200 is greater than that of the light supplementing lamp 2, and in this case, which facilitates the infrared camera 200 to snap the human face.

As described above, the light supplementing lamp 2 and the infrared camera 200 orient toward the passage entrance of the gate device passage A. In order to better aim at the human face of the person to be detected, the orientations of the light supplementing lamp 2 and the infrared camera 200 can be tilted upward and form a first preset angle with the horizontal direction. The first preset angle may be 10°, 15° or 20°, and the specific value of the first preset angle is not limited in the embodiment of the present application.

During the process of passing through the gate device passage A, the person to be detected generally walks in the middle of the gate device passage A. In this regard, in an embodiment, in order to better perform human face recognition and supplement light, both the light supplementing lamp 2 and the infrared camera 200 are tilted towards the central axis of the gate device passage A, and the orientations of the light supplementing lamp 2 and the infrared camera 200 form a second preset angle with the central axis. Similarly, the second preset angle may be 5°, 8°, 15°, etc., and the specific value of the second preset angle is not limited in the embodiment of the present application. As described above, the gate device passage A has a passage entrance and a passage exit. It should be noted that in this paper, the central axis refers to the connecting line between the center of the passage entrance and the center of the passage exit, and the central axis runs through the gate device passage A.

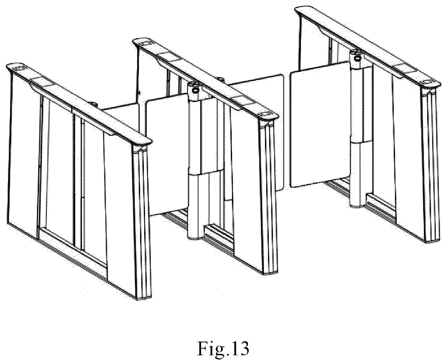

In some embodiments, as shown in Fig. 13, the gate device may include two passages and box bodies on both sides of each passage.

In some embodiments, the two passages may be for entering and exiting, wherein the box bodies on both sides may adopt the box body structure in any of the above embodiments, and the intermediate box body is different from the box bodies on both sides in that it is provided with two core assemblies, two infrared light supplementing lamps, two imaging assemblies, etc. to meet the bidirectional requirements for entering and exiting, wherein the two core assemblies are symmetrically arranged under the same top beam, and the orientations of the two imaging assemblies are respectively opposite to those of the imaging assemblies opposited to them, so that the imaging assembly is correspondingly provided on each of two passage openings in one passage. The two infrared light supplementing lamps may be respectively arranged between the top beam and the top cover and orient toward the two passage openings of the passage respectively, or the two infrared light supplementing lamps may be fixedly connected to the core assembly together with the infrared cameras in the two imaging assemblies and close to the top end of the core assembly.

In some embodiments, the gate device may have the above structure, except for setting one passage as the entrance passage and the other passage as the exit passage. The infrared light supplementing lamp and the imaging assembly on the intermediate box body may be set to a non-operating state, for example, not be powered so that they do not work.

In some embodiments, the gate device may have the above structure, except for setting one passage may be set as the entrance passage and the other passage as the exit passage, and the infrared light supplementing lamp and the imaging assembly are not provided on the intermediate box body.

Although the present application has been described herein in combination with various embodiments, in the process of implementing the claimed application, those skilled in the art can understand and realize other variations of the disclosed embodiments by reviewing the drawings, the disclosure and the appended claims. In the claims, the word "comprising" does not exclude other components or steps, and "a" or "an" does not exclude plural cases. A single processor or other unit can realize several functions recited in the claims. Certain measures are recorded in mutually different dependent claims, but this does not mean that these measures cannot be combined to produce good results.

Although the present application has been described in combination with specific features and embodiments thereof, it is obvious that various modifications and combinations can be made without departing from the spirit and scope of the present application. Accordingly, the description and drawings are merely illustrative of the present application as defined by the appended claims, and are deemed to cover any and all modifications, variations, combinations or equivalents within the scope of the present application. Obviously, various modifications and variations can be made to the present application by those skilled in the art without departing from the spirit and scope of the present application. Thus, if these modifications and variations of the present application fall within the scope of the claims of the present application and their technical equivalents, the present application is also intended to include these modifications and variations.

The above is only the specific implementation of the present application, but and it is not used to limit the protection scope of the present application. Any change or replacement within the technical scope disclosed in the present application should be included in the protection scope of the present application. Therefore, the protection scope of the present application should be based on the protection scope of the claims.

## Claims

1. A gate device, comprising:
a box body, wherein a passage space for passage of a passing object is formed at one side of a plane where the box body is located, and the box body comprises a box body shell for accommodating a core assembly;
a top cover covering an upper end of the box body;
a door panel which is movable under a drive of a control assembly to control passage of a target, wherein the core assembly comprises the control assembly;
wherein the core assembly further comprises an imaging assembly which comprises a camera, wherein the camera is arranged towards a direction of an entrance of the passage space and arranged at a position lower than a plane where the top cover is located, for acquiring an image of the passing object;
the core assembly further comprises a light supplementing lamp which emits supplementing light towards the direction of the entrance of the passage space and is arranged at a position lower than the plane where the top cover is located;
a field of view of the camera and a light supplementing range of the light supplementing lamp overlap at least at the entrance of the passage space.

2. The gate device according to claim 1, further comprising:
an infrared emitting subcomponent arranged on the box body, wherein the infrared emitting subcomponent emits infrared light, and
an infrared receiving subcomponent correspondingly arranged on a further box body opposite to the box body, wherein the infrared receiving subcomponent detects the target in the passage space based on reception of the infrared light, and a wavelength range of the supplementing light and a wavelength range of the infrared light partially overlap or do not overlap at all.

3. The gate device according to claim 1 or 2, wherein,
the box body shell comprises a protrusion, which extends outwards along a direction from the plane where the box body is located towards the passage space; the protrusion is entirely located below an upper surface of the top cover in a vertical direction; a cavity for accommodating the imaging assembly is arranged inside the protrusion; the imaging assembly is entirely or partially placed in the cavity, and a hole is provided on the protrusion, through which the camera collects the image.

4. The gate device according to claim 3, wherein,
the cavity is located at an end of the protrusion close to the top cover.

5. The gate device according to any one of the preceding claims, wherein,
the light supplementing lamp is arranged inside the box body and emits the supplementing light outwards through a light transmission portion arranged on the top cover.

6. The gate device according to claim 5, wherein the light supplementing lamp is closer to the entrance of the passage space than the camera.

7. The gate device according to claim 3 or 4, wherein the light supplementing lamp is arranged in the cavity and oriented towards the hole.

8. The gate device according to claim 7, wherein a height of the camera is greater than that of the light supplementing lamp.

9. The gate device according to any one of the preceding claims, wherein the camera comprises a visible light camera for collecting a visible light image for human face recognition, and a field of view of the visible light camera covers the entrance of the passage space; or,
the camera comprises an infrared camera for collecting an infrared image for detection or collecting an infrared image in a low illumination for human face recognition.

10. The gate device according to any one of the preceding claims, further comprising a display screen arranged between the top cover and the box body, wherein the display screen displays the image or information through a light transmission portion arranged on the top cover.

11. The gate device according to claim 10, further comprising a processor, wherein the display screen is configured for displaying human facial information according to a received image collected by the camera; or, the display screen is configured for, when the processor determines that a comparison between an image collected by the camera and a pre-stored image fails, displaying information prompting the passing object to adjust position and/or orientation thereof according to a signal received from the processor.

12. The gate device according to claim 11, further comprising a speaker arranged in the box body shell, wherein the speaker is configured for playing voice prompt information according to the signal received from the processor.

13. The gate device according to any one of the preceding claims, further comprising an arc-shaped carrying handle which is connected to top ends of two side surfaces of the box body shell that intersect with the plane where the box body is located, and the top cover covers the carrying handle.

14. The gate device according to any one of the preceding claims, wherein an upper surface of the top cover is substantially flush.

15. A gate device, comprising:
a box body, wherein passage spaces for passage of passing objects are formed at two sides of a plane where the box body is located, and the box body comprises a box body shell for accommodating a core assembly;
a top cover covering an upper end of the box body;
door panels which are arranged respectively on the two sides of the plane where the box body is located and are movable under a drive of a control assembly to control passage of a target, wherein the core assembly comprises the control assembly;
wherein the core assembly further comprises two imaging assemblies of which each comprises a camera, wherein two of the cameras are respectively arranged towards two passage openings of the passage spaces and are arranged at positions lower than the plane where the top cover is located, for acquiring images of the passing objects;
the core assembly further comprises two light supplementing lamps, wherein the two light supplementing lamps respectively emit supplementing light towards the two passage openings of the passage space and are arranged at positions lower than the plane where the top cover is located;
a field of view of a camera and a light supplementing range of a light supplementing lamp towards a same passage opening of the passage space overlap at least at the passage opening.
